# EUROPÄISCHE PATENTSCHRIFT

(11) **EP 4 554 846 B1**
(45) Veröffentlichungstag und Bekanntmachung des Hinweises auf die Patenterteilung: **30.09.2026**
(21) Anmeldenummer: 23782138.4
(22) Anmeldetag: 14.07.2023
(51) Int. Cl.: B62J 7/02, B62J 7/08, B62J 9/00, B62J 9/20, B62J 9/27, B62J 11/00

(54) **VORRICHTUNG ZUR LÖSBAREN BEFESTIGUNG EINES TRANSPORTGEGENSTANDS AN EINEM FAHRRAD MIT EINER ELASTISCHEN HALTEVORRICHTUNG SOWIE EIN RUCKSACK UMFASSEND EINE SOCHE HALTEVORRICHTUNG**
DEVICE FOR DETACHABLY FASTENING AN OBJECT TO BE TRANSPORTED TO A BICYCLE USING AN ELASTIC HOLDING DEVICE AS WELL AS A BACKPACK COMPRISING SUCH A DEVICE
DISPOSITIF DE FIXATION AMOVIBLE D'UN OBJET À TRANSPORTER SUR UNE BICYCLETTE AU MOYEN D'UN DISPOSITIF DE RETENUE ÉLASTIQUE ET UN SAC A DOS AVEC UN TEL DEISPOSITIV

(30) Priorität: 14.07.2022 AT 505212022
(43) Veröffentlichungstag der Anmeldung: 21.05.2025
(73) Patentinhaber: Vamoz GmbH, 73037 Göppingen (DE)
(72) Erfinder: DJOKIC, Petar, 1220 Wien (AT); WASSER, Stefan, 70182 Stuttgart (DE)
(74) Vertreter: Müller, Gottfried
(86) Internationale Anmeldenummer: PCT/EP2023/069621
(87) Internationale Veröffentlichungsnummer: WO 2024/013365

(56) Entgegenhaltungen:
- BE-A- 502 772
- DE-U1- 29 505 727
- JP-U- S4 982 445
- US-A1- 2014 263 508

## Beschreibung

Die Erfindung betrifft eine Vorrichtung gemäß dem Oberbegriff des Anspruchs 1, sowie einen Rucksack entsprechend dem Anspruch 15.

Es ist bekannt, Transportgegenstände wie beispielsweise Transporttaschen an Fahrrädern anzubringen. Als Fahrräder im Sinne der Erfindung gelten herkömmliche

Fahrräder aber auch weitere Ausgestaltungen von Fahrrädern wie beispielsweise Dreiräder, E-Bikes, Laufräder oder ähnliche Fortbewegungsmittel.

Bei bekannten Systemen wird der Transportgegenstand beispielsweise an einem Gepäcksträger, einer Lenkstange oder der Sattelstütze des Fahrrads angebracht.

Herkömmliche Vorrichtungen weisen jedoch meist Einschränkungen bezüglich des maximal erlaubten Traggewichts auf. Darüber hinaus ist die Fixierung des Transportgegenstands am Fahrrad bei herkömmlichen Vorrichtungen meist umständlich oder unsicher. So scheint bei herkömmlichen Konstruktionen ein Zielkonflikt zwischen Bedienbarkeit und Sicherheit der Befestigung zu bestehen.

Zudem gibt es am Markt eine Nachfrage nach Systemen, bei denen Transportgegenstände an dem Fahrrad montiert werden können, ohne dass die dazu notwendigen Adaptionen am Fahrrad oder am Transportgegenstand sehr aufwendig und auffällig sind. Schließlich können derartige Anbaukomponenten sowohl am Fahrrad als auch am Transportgegenstand stören, wenn kein Transportbedarf besteht.

Dokument BE502772A zeigt die Präambel des Anspruchs 1.

Aufgabe der Erfindung ist es nun, eine Vorrichtung zur lösbaren Befestigung eines Transportgegenstands an einem Fahrrad zu schaffen, deren Sicherheit und Bedienkomfort verbessert ist.

Aufgabe der Erfindung ist es einen Rucksack zu schaffen, umfassend eine Haltevorrichtung zur lösbaren Befestigung an einem Fahrrad mittels einer beschriebenen Vorrichtung.

Die Erfindung bezieht sich grundsätzlich auf eine Vorrichtung zur lösbaren Befestigung eines beliebigen Transportgegenstands. Jedoch ist der Transportgegenstand gemäß einer bevorzugten Ausführungsform ein Rucksack. Dieser Rucksack soll einfach und sicher mit dem Fahrrad verbunden werden können. Als zusätzliche Aufgabe ergibt bei der Ausführungsform eines Rucksacks, dass sich der Bedienkomfort der Vorrichtung auch auf den Bedienkomfort des Rucksacks erstreckt und auch der Rucksack komfortabel tragbar sein soll und sicher mit dem Fahrrad verbindbar sein soll.

Die erfindungsgemäße Aufgabe wird insbesondere durch die Merkmale der unabhängigen Patentansprüche gelöst.

Die Erfindung betrifft eine Vorrichtung zur lösbaren Befestigung eines Transportgegenstands, wie insbesondere eines Rucksacks oder einer Tasche, an einem Fahrrad.

Erfindungsgemäß umfasst die Vorrichtung eine fahrradseitig angebrachte bzw. anbringbare Befestigungsvorrichtung und eine transportgegenstandsseitig angebrachte bzw. anbringbare Haltevorrichtung.

Erfindungsgemäß weist die Haltevorrichtung einen Haltebereich zur Halterung des Transportgegenstands und einen Befestigungsbereich zur Befestigung der Haltevorrichtung an der Befestigungsvorrichtung auf.

Erfindungsgemäß ist vorgesehen, dass die Haltevorrichtung elastisch verformbare Verbindungselemente aufweist, über die der Befestigungsbereich federnd mit dem Haltebereich verbunden ist.

Die Verbindungselemente sind derart ausgestaltet, dass sie, zur Abfederung der vom Fahrrad auf den Transportgegenstand übertragenen Stöße, eine gefederte Relativbewegung des Befestigungsbereichs gegenüber dem Haltebereich erlauben.

Gegebenenfalls ist vorgesehen, dass die Relativbewegung durch Stöße bei bestimmungsgemäßer Verwendung, beispielsweise bei Normalbeladung oder bei Maximalbeladung, mehr als 3mm, gegebenenfalls mehr als 5mm, gegebenenfalls zwischen 5 und 10mm beträgt.

Insbesondere kann die Halterung als schwimmende bzw. gefederte Halterung bezeichnet werden.

Gegebenenfalls ist vorgesehen, dass die Verbindungselemente in der montierten Stellung der Vorrichtung ihre Federwirkung entlang der Richtung der Schwerkraft entfalten.

Gegebenenfalls ist vorgesehen, dass die Haltevorrichtung gitterförmig ausgebildet ist.

Gegebenenfalls ist vorgesehen, dass die Haltevorrichtung oder zumindest der Haltebereich aus Stegen zusammengesetzt ist.

Gegebenenfalls ist vorgesehen, dass die Haltevorrichtung in ihrer unverformten Stellung entlang einer Ebene verläuft.

Gegebenenfalls ist vorgesehen, dass die Haltevorrichtung einen Haltebügel oder einen Halterahmen aufweist, der zumindest einen Teil des Haltebereichs bildet.

Gegebenenfalls ist vorgesehen, dass in der Haltevorrichtung mehrere Öffnungen, insbesondere Lüftungsöffnungen, vorgesehen sind.

Bevorzugt ist die Haltevorrichtung dadurch keine Platte und insbesondere keine starre Platte.

Gegebenenfalls ist vorgesehen, dass die Haltevorrichtung als einstückiges Teil ausgebildet ist.

Gegebenenfalls ist vorgesehen, dass die Haltevorrichtung als Rückeneinlage zur Einlage in eine Rückentasche eines Rucksacks ausgebildet ist.

Gegebenenfalls ist vorgesehen, dass die Form der Haltevorrichtung an die Form des Rückenteils des Rucksacks angepasst ist und sich insbesondere flexibel an die Form des Rückenteils anpasst.

Gegebenenfalls ist vorgesehen, dass eine arretierbare und werkzeuglos lösbare Hakenverbindung zur Verbindung der Befestigungsvorrichtung und der Haltevorrichtung vorgesehen ist.

Gegebenenfalls ist vorgesehen, dass die Hakenverbindung entlang der Schwerkraftrichtung verbindbar und gegen die Schwerkraft lösbar ausgebildet ist.

Gegebenenfalls ist vorgesehen, dass die Hakenverbindung einen beim Verbinden selbsttätig einrastenden Schnappverschluss umfasst, der werkzeuglos, insbesondere durch Betätigen des Schnappverschlusses gelöst werden kann.

Gegebenenfalls ist vorgesehen, dass die Hakenverbindung mindestens eine Einlauffläche und insbesondere eine Einlaufschräge zur Lagezentrierung der Hakenverbindung beim Verbinden aufweist.

Gegebenenfalls ist vorgesehen, dass die Hakenverbindung einen an der Befestigungsvorrichtung vorgesehenen Haken und eine in der Haltevorrichtung, insbesondere im Befestigungsbereich, vorgesehene Hakentasche zur Aufnahme des Hakens aufweist.

Gegebenenfalls ist vorgesehen, dass die Befestigungsvorrichtung eine Fixiervorrichtung zur Befestigung der Befestigungsvorrichtung aufweist.

Gegebenenfalls ist vorgesehen, dass die Befestigungsvorrichtung einen Träger umfasst, und dass an einem Ende des Trägers die Fixiervorrichtung und am anderen Ende des Trägers die Hakenverbindung vorgesehen ist.

Gegebenenfalls ist vorgesehen, dass der Träger längenverstellbar und insbesondere teleskopartig längenverstellbar ausgebildet ist.

Gegebenenfalls ist vorgesehen, dass die Fixiervorrichtung eine Basis, ein Klemmband, eine zwischen Basis und Klemmband vorgesehene Klemmöffnung zur Durchführung eines Teils des Fahrrads wie insbesondere der Sattelstütze aufweist.

Gegebenenfalls ist vorgesehen, dass die Fixiervorrichtung mindestens einen auf einer Keilfläche verschiebbar angeordneten Keil und ein auf den Keil wirkendes Spannelement aufweist.

Gegebenenfalls ist vorgesehen, dass der Keil bei Betätigen des Spannelements das Klemmband festzieht.

Gegebenenfalls ist vorgesehen, dass die Fixiervorrichtung zwei auf je einer Keilfläche verschiebbar angeordneten Keile und ein auf die Keile wirkendes Spannelement aufweist.

Gegebenenfalls ist vorgesehen, dass die Keile bei Betätigen des Spannelements das Klemmband festziehen und bevorzugt Richtung Basis festziehen.

Insbesondere betrifft die Erfindung eine umfassend ein Fahrrad, einen Transportgegenstand wie insbesondere einen Rucksack und die Vorrichtung zur lösbaren Befestigung des Transportgegenstands an dem Fahrrad.

Die Erfindung betrifft einen Rucksack, umfassend eine Haltevorrichtung zur lösbaren Befestigung an einem Fahrrad mittels einer beschriebenen Vorrichtung.

Gegebenenfalls ist vorgesehen, dass die Haltevorrichtung einen Haltebereich zur Halterung des Rucksacks und einen Befestigungsbereich zur Befestigung der Haltevorrichtung an einer Befestigungsvorrichtung aufweist.

Die beschriebenen Komponenten wirken zusammen, um die erfindungsgemäße Aufgabe zu lösen. Jedoch tragen die einzelnen Komponenten auch individuell zur Verbesserung und zur Lösung der erfindungsgemäßen Aufgabe bei, sodass sie auch unabhängig voneinander in alternativen Ausführungsformen eingesetzt werden können.

Beispielsweise kann die Haltevorrichtung auch mit einer anderen Befestigungsvorrichtung eingesetzt werden. Beispielsweise kann die Fixiervorrichtung auch mit einer anderen Befestigungsvorrichtung und einer anderen Haltevorrichtung eingesetzt werden. Beispielsweise kann die Hakenverbindung und/oder der Schnappverschluss auch mit einer anderen Befestigungsvorrichtung einer anderen Haltevorrichtung oder einer anderen Fixiervorrichtung eingesetzt werden.

Bevorzugt ist vorgesehen, dass der Verlauf der Verbindungselemente von der Schwerkraftrichtung oder von der Richtung der auf den Transportgegenstand übertragenen Stöße abweicht. Dadurch können sich die Verbindungselemente verbiegen, wenn Kräfte von der Befestigungsvorrichtung auf den Transportgegenstand übertragen werden.

Bevorzugt ist vorgesehen, dass die Haltevorrichtung gitterförmig ausgebildet ist oder zumindest einen gitterförmigen Abschnitt aufweist und insbesondere aus Stegen zusammengesetzt ist, sodass sie flexibel und elastisch verformbar ist, um sich beispielsweise an den Transportgegenstand anzupassen.

Bevorzugt wird eine Anordnung gebildet, bei der ein Transportgegenstand, insbesondere ein Rucksack, durch einen Träger in einem gewissen Abstand von dem Fahrrad gehalten wird.

Bevorzugt ist die Befestigungsvorrichtung an der Sattelstütze anbringbar und der Transportgegenstand wird in Fahrtrichtung des Fahrrads betrachtet hinter dem Sattel bzw. der Sattelstütze gehalten.

Bevorzugt wird der Transportgegenstand, insbesondere der Rucksack, aufrecht gehalten.

Gegebenenfalls ist eine Fixiervorrichtung vorgesehen, die ein Klemmband umfasst, wobei an beiden Enden des Klemmbandes jeweils ein Keil vorgesehen ist, wobei die beiden Keile jeweils an einer Keilfläche der Basis der Fixiervorrichtung verschiebbar angeordnet sind, und wobei die beiden Keile durch Betätigen eines Spannelements derart entlang der Keilflächen verschoben werden können, dass das Klemmband ein Teil des Fahrrads einklemmt. Dadurch kann die Befestigungsvorrichtung fest mit einem Teil des Fahrrads verbunden werden.

Bevorzugt ist vorgesehen, dass jene Seite der Vorrichtung bzw. der Haltevorrichtung, die zu dem Transportgegenstand weist, an die Form des Transportgegenstands angepasst oder anpassbar ist. Insbesondere ist diese Seite oder Fläche frei von Erhebungen oder Fortsätzen, sodass, im Falle eines Rucksacks, der Tragekomfort durch derartige Erhebungen nicht beeinträchtigt ist. Eine glatte Fläche, die sich insbesondere an die Rückenfläche eines Rucksacks anpassen kann, kann ebenfalls vorgesehen sein.

Bevorzugt ist vorgesehen, dass zum Fixieren der Fixiervorrichtung nur ein einziges Spannelement vorgesehen ist, das beispielsweise als Schraube oder Schnellspanner ausgebildet ist. Durch Festziehen des Spannelements kann dadurch die Vorrichtung an dem Fahrrad befestigt werden.

Das Klemmband kann in allen Ausführungsformen beispielsweise ein Metallband, ein Kunststoffband, ein Textilband oder ein ähnliches festes Band sein, das eine Montage des Transportgegenstands am Fahrrad ermöglicht.

**In** allen Ausführungsformen kann beispielsweise vorgesehen sein, dass die Basis eine U-förmige oder abgerundete Auflagefläche umfasst, die die Sattelstütze zumindest teilweise umgreift. Insbesondere kann die Sattelstütze teilweise in dem U-förmig ausgebildeten Teil der Basis angeordnet werden, sodass die Sattelstütze in einer vorbestimmten Stellung gehalten wird. Beispielsweise kann diese U-förmig ausgebildete Fläche zylindrisch sein, und einen Zylinderdurchmesser von etwa 28mm aufweisen. Insbesondere kann der Durchmesser zwischen 25mm und 35mm betragen, da die Durchmesser von Sattelstützen in diesem Bereich liegen. Die Auflagefläche kann aus demselben Material gefertigt sein wie die Basis bzw. wie der Träger, also beispielsweise aus einem festen Metall oder aus einem festen Kunststoff.

Bevorzugt ist vorgesehen, dass die federnde Verbindung des Haltebereichs mit dem Befestigungsbereich in vertikaler aber auch in horizontaler Richtung, also in Fahrtrichtung des Fahrrads gesehen, seitlich wirkt.

Die Haltevorrichtung ist flach ausgebildet, wobei der Befestigungsbereich. der Haltebereich und die Verbindungselemente im Wesentlichen in einer Ebene liegen, um zusammen einen flachen bzw. flach gitterförmigen Körper zu bilden. Hierdurch kann die Haltevorrichtung in eine flache Tasche des Transportgegenstands bzw. eines Rucksacks eingeführt werden.

Die Haltevorrichtung ist gegebenenfalls in einer Rückentasche eines Rucksacks angeordnet. Diese Rückentasche kann eine Richtung Fahrrad weisende Öffnung aufweisen, durch die die Befestigungsvorrichtung eingeführt und mit der Haltevorrichtung verbunden werden kann. Diese Öffnung hat bevorzugt ein gewisses Übermaß, um eine Relativbewegung des Rucksacks bzw. des Haltebereichs gegenüber dem Befestigungsbereich zu ermöglichen.

In allen Ausführungsformen ist bevorzugt vorgesehen, dass die Vorrichtung eine Tragfähigkeit von mehr als 10kg aufweist. Hierdurch können Transportgegenstände transportiert werden, die mehr als 10kg wiegen. Dies wird durch eine oder mehrere der Komponenten der Vorrichtung ermöglicht.

Die Erfindung bzw. deren individuelle Komponenten werden anhand der Figuren weiter beschrieben.
**Fig. 1** zeigt eine schematische Seitenansicht bzw. Schnittdarstellung einer Anordnung.
**Fig. 2** zeigt eine schematische Schrägansicht von Komponenten der Vorrichtung.
**Fig. 3** zeigt eine schematische Schnittdarstellung von Komponenten der Vorrichtung.
**Fig. 4** zeigt eine schematische Schnittdarstellung einer Ausführungsform einer Fixiervorrichtung.
Die **Fig. 5a****,** **5b** und **5c** zeigen schematische Schrägansichten von möglichen Ausgestaltungen von Teilen einer Befestigungsvorrichtung.

Wenn nicht anders angegeben, so entsprechen die Bezugszeichen folgenden Komponenten: Transportgegenstand 1, Fahrrad 2, Befestigungsvorrichtung 3, Haltevorrichtung 4, Haltebereich 5, Befestigungsbereich 6, Schwerkraftrichtung 7, Verbindungselement 8, Haltebügel 9, Öffnungen (der Haltevorrichtung) 10, Rückentasche 11, Hakenverbindung 12, Schnappverschluss 13, Einlauffläche 14, Haken 15, Hakentasche 16, Fixiervorrichtung 17, Träger 18, Basis 19, Klemmband 20, Klemmöffnung 21, Keil 22, Spannelement 23, Keilfläche 24.

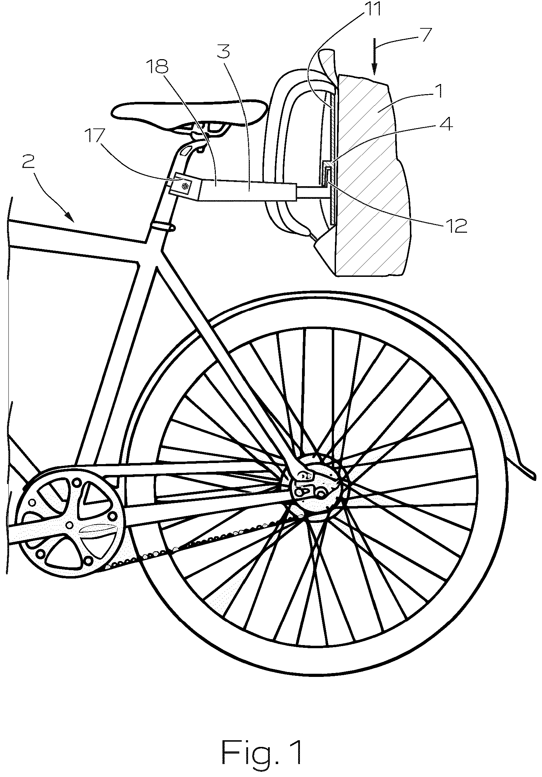

**Fig. 1** zeigt eine Anordnung mit einem Fahrrad 2, an dem ein Transportgegenstand 1 befestigt ist. Der Transportgegenstand 1 ist in der vorliegenden Ausführungsform als Rucksack ausgebildet. Dieser weist eine Rückentasche 11 auf, in der zumindest eine Komponente zur Befestigung des Transportgegenstands 1 an dem Fahrrad 2 vorgesehen ist.

Grundsätzlich ist die Vorrichtung bzw. die Anordnung auch dazu geeignet, andere Transportgegenstände 1 an dem Fahrrad 2 zu befestigen. In diesem Fall ist die Rückentasche 11 als andere gleichwirkende Tasche oder Befestigungsmöglichkeit für ein Teil der Vorrichtung ausgebildet.

Die Anordnung wird anhand der in Fig. 1 dargestellten Ausführungsform als Rucksackhalterung beschrieben.

Die Vorrichtung zur Befestigung umfasst eine Befestigungsvorrichtung 3 und eine Haltevorrichtung 4. Die Befestigungsvorrichtung 3 ist fahrradseitig, also am Fahrrad 2, befestigt. Die Haltevorrichtung 4 ist transportgegenstandseitig, also am Transportgegenstand 1, befestigt. Die Befestigungsvorrichtung 3 und die Haltevorrichtung 4 können einfach miteinander verbunden und einfach voneinander gelöst werden, um den Transportgegenstand 1 am Fahrrad 2 zu befestigen.

Insbesondere umfasst die Vorrichtung eine Hakenverbindung 12, über die die Haltevorrichtung 4 mit der Befestigungsvorrichtung 3 verbunden werden kann. Die Hakenverbindung 12 ist bevorzugt werkzeuglos verbindbar und trennbar. Dennoch soll die Hakenverbindung 12 eine sichere Verbindung der Befestigungsvorrichtung 3 mit der Haltevorrichtung 4 ermöglichen.

Bevorzugt wird die Hakenverbindung 12 entlang der Schwerkraftrichtung 7 verbunden und gegen die Schwerkraftrichtung 7 gelöst. Dies ermöglicht eine sehr einfache Verbindung, da der Transportgegenstand 1, insbesondere dessen Haltevorrichtung 4, zur Befestigungsvorrichtung 3 geführt wird und die Schwerkraft dabei hilft, die Hakenverbindung 12 zu schließen. Gegebenenfalls wird die Verbindung der Hakenverbindung 12 durch die Schwerkraft selbsttätig hergestellt. Zudem hilft die Schwerkraft dabei, ein Öffnen der Hakenverbindung 12 gegen die Schwerkraftrichtung 7 zu verhindern. Insbesondere dadurch ist die Sicherheit der Vorrichtung verbessert.

**In** allen Ausführungsformen ist bevorzugt vorgesehen, dass die Hakenverbindung 12 im Wesentlichen entlang der Schwerkraftrichtung 7 verläuft, wobei, um den beschriebenen vorteilhaften Effekt zu erhalten, auch schräge Anordnungen denkbar sind, bei denen die Wirkrichtung gegenüber der Schwerkraftrichtung 7 geneigt ist.

Die Befestigungsvorrichtung 3 ist bevorzugt über eine Fixiervorrichtung 17 am Fahrrad 2 angebracht. Insbesondere ist die Befestigungsvorrichtung 3 an der Sattelstütze des Fahrrads 2 angebracht. Die Fixiervorrichtung 17 ermöglicht in bevorzugter Weise eine feste, sichere Montage der Befestigungsvorrichtung 3 am Fahrrad 2. Bevorzugt bleibt die Fixiervorrichtung 17 bei bestimmungsgemäßem Gebrauch der Vorrichtung am Fahrrad 2 befestigt. Aus diesem Grund kann die Fixiervorrichtung 17 beispielsweise durch ein spezielles Werkzeug am Fahrrad 2 fixiert werden.

Die Befestigungsvorrichtung 3 umfasst in dieser Ausführungsform einen Träger 18. Dieser Träger 18 weist zwei Enden auf, wobei bevorzugt an einem seiner Enden die Fixiervorrichtung 17 und an seinem anderen Ende die Hakenverbindung 12 vorgesehen ist. Insbesondere wirkt der Träger 18 als Kragträger, der von dem Fahrrad 2 auskragt, sodass der Transportgegenstand 1 beabstandet von dem Fahrrad 2 angebracht werden kann.

In einer bevorzugten Ausführungsform, wie auch in Fig. 1 dargestellt, ist der Träger 18 verstellbar ausgebildet, sodass die Länge des Trägers 18 angepasst werden kann. Dadurch kann der Abstand des Transportgegenstands 1 vom Fahrrad 2 gewählt werden. Die Verstellung des Trägers 18 kann bevorzugt einmalig erfolgen, um den Abstand zwischen dem Transportgegenstand 1 zu dem Fahrrad 2 anzupassen. So kann es vorteilhaft sein, den Transportgegenstand 1 so nah wie möglich am Fahrrad 2 zu befestigen, jedoch soll dabei die Bedienung des Fahrrads 2 nicht eingeschränkt sein.

Gegebenenfalls kann die Länge des Trägers 18 aber auch je nach Transportgegenstand 1 angepasst werden. Bevorzugt ist in allen Ausführungsformen vorgesehen, dass die Haltevorrichtung 4 im Wesentlichen aufrecht angeordnet ist, wenn sie mit der Befestigungsvorrichtung 3 verbunden ist. In der vorliegenden Ausführungsform wird dadurch auch der Rucksack aufrecht gehalten.

Gegebenenfalls ist vorgesehen, dass die Befestigungsvorrichtung 3 einen Knick oder einen Winkel aufweist, sodass, trotz der Schrägstellung der Fahrradkomponente 2, eine aufrechte Montage der Haltevorrichtung 4 erfolgen kann. Jedoch ist es natürlich auch möglich, die Haltevorrichtung 4 leicht schräg zu montieren.

Gegebenenfalls ist es möglich, mit einer Ausführungsform der Vorrichtung den Transportgegenstand 1 an einer anderen Komponente des Fahrrads 2, beispielsweise an der Sattelstrebe, am Sattelrohr, an der Unterstrebe, am Steuerrohr oder am Lenker anzubringen.

Beim Fahren mit dem Fahrrad 2 treten üblicherweise Stöße auf. Diese Stöße wirken meist in Hochrichtung des Fahrrads 2 bzw. entlang der Schwerkraftrichtung 7. Bei höherem Gewicht des Transportgegenstands 1 führt dies zu einer hohen Belastung der Vorrichtung zur Verbindung des Transportgegenstands 1 mit dem Fahrrad 2. Insbesondere tritt eine hohe Belastung der Komponenten der Befestigungsvorrichtung 3 auf.

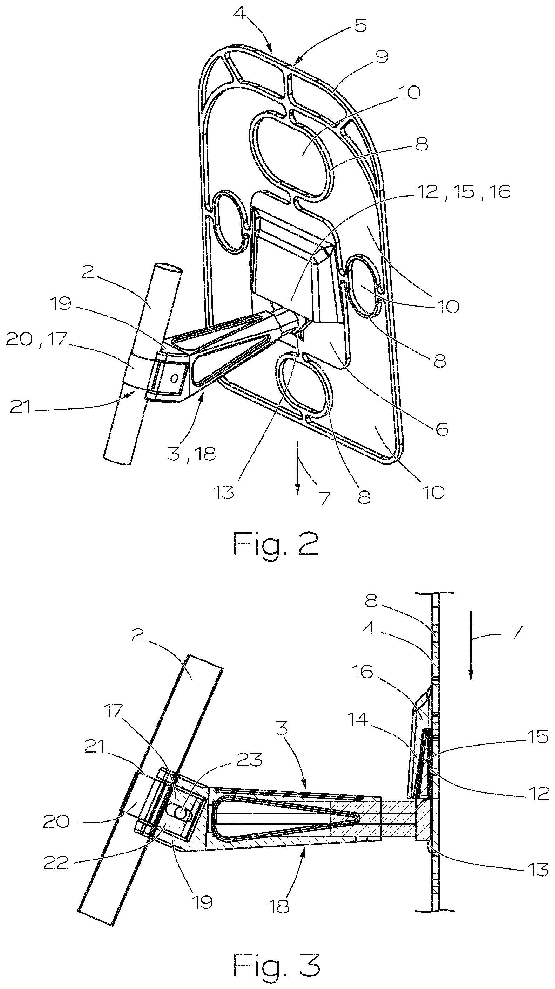

Eine Ausführungsform der Haltevorrichtung 4, wie sie beispielsweise in Fig. 2 dargestellt ist, hilft bei der Kompensation der auf die Vorrichtung wirkenden Stöße. **Fig. 2** zeigt eine mögliche Ausgestaltung einer Vorrichtung zur Befestigung eines nicht dargestellten Transportgegenstands 1 an einem Fahrrad 2, wobei in der Fig. 2 nur ein Teil eines Fahrrads 2 dargestellt ist.

Die Vorrichtung umfasst eine Haltevorrichtung 4. Die Haltevorrichtung 4 ist dazu geeignet und/oder eingerichtet, den Transportgegenstand 1 zu halten. Beispielsweise kann die Haltevorrichtung 4 der Fig. 2 in die Rückentasche 11 eines Rucksacks eingeführt sein, wie dies in Fig. 1 dargestellt ist.

Die Haltevorrichtung 4 umfasst einen Haltebereich 5 und einen Befestigungsbereich 6. Der Haltebereich 5 dient dazu, den Transportgegenstand 1 zu halten. Im Falle eines Rucksacks hängt der Rucksack an dem Haltebereich 5 bzw. ist der Rucksack maßgeblich durch den Haltebereich 5 gehalten. Der Haltebereich 5 kann, wie in der vorliegenden Ausführungsform, einen Haltebügel 9 umfassen, der in der vorliegenden Ausführungsform ähnlich wie ein Kleiderbügel wirkt. Der Haltebügel 9 kann auch rahmenförmig ausgebildet sein, wie in der vorliegenden Ausführungsform der Fig. 2. Hier ist ein außenliegender Rahmen vorgesehen, an dem der Transportgegenstand 1 gehalten wird.

Die Form des Haltebereichs 5 kann an den zu transportierenden Transportgegenstand 1 angepasst sein. Im Falle einer Sporttasche kann der Haltebereich 5 an die Form der Sporttasche angepasst sein. Bevorzugt verbleibt die Haltevorrichtung 4 im Transportgegenstand 1, wenn dieser bestimmungsgemäß verwendet wird.

Die Haltevorrichtung 4 umfasst einen Befestigungsbereich 6. Der Befestigungsbereich 6 ist dazu eingerichtet, mit der Befestigungsvorrichtung 3 verbunden zu werden. Insbesondere greift die Befestigungsvorrichtung 3 am Befestigungsbereich 6 der Haltevorrichtung 4 an.

Bevorzugt ist die Verbindung zwischen der Befestigungsvorrichtung 3 und dem Befestigungsbereich 6 als starre Verbindung, beispielsweise als Hakenverbindung 12, ausgebildet.

Die Hakenverbindung 12 kann einen Schnappverschluss 13 aufweisen, durch den die Hakenverbindung 12 selbsttätig verrastet, wenn sie geschlossen wird. **In** der vorliegenden Ausführungsform weist der Schnappverschluss 13 einen Knopf bzw. eine Erhebung auf, durch die die Hakenverbindung 12 solange geschlossen bleibt, bis dieser Knopf bzw. die Erhebung betätigt wird. Diese Betätigung kann bevorzugt werkzeuglos erfolgen. Bevorzugt ist diese Erhebung bzw. der Knopf federnd vorgespannt, sodass ein Schnappverschluss 13 gebildet ist.

Bevorzugt sind in allen Ausführungsformen die Befestigungsvorrichtung 3 und die Fixiervorrichtung 17 in ihrer verbundenen Stellung starr ausgebildet.

Gegebenenfalls ist die Befestigungsvorrichtung 3 längenverstellbar ausgebildet. So kann die Befestigungsvorrichtung 3 einen Träger 18 aufweisen, dessen Länge veränderbar ist. Jedoch soll bevorzugt die Befestigungsvorrichtung 3 bei der bestimmungsgemäßen Verwendung des Transportgegenstands 1, also wenn dieser mit dem Fahrrad 2 verbunden ist, starr bzw. fest ausgebildet sein.

Wie zu Fig. 1 erörtert, treten beim Transport durch ein Fahrrad 2 Stöße auf, die auf den Transportgegenstand 1 wirken. Durch die Massenträgheit führt dies zu einer mechanischen Belastung der Befestigungsvorrichtung 3.

Bevorzugt ist die Haltevorrichtung 4 derart ausgebildet, dass der Haltebereich 5 gegenüber dem Befestigungsbereich 6 bewegbar, insbesondere elastisch bewegbar, ausgebildet ist. Hierzu umfasst die Haltevorrichtung 4 Verbindungselemente 8, die den Haltebereich 5 mit dem Befestigungsbereich 6 elastisch, federnd bzw. bewegbar verbinden. Tritt ein Stoß auf, so wird dieser durch die Befestigungsvorrichtung 3 auf den Befestigungsbereich 6 der Haltevorrichtung 4 übertragen. Die daraus resultierenden Kräfte wirken über die Verbindungselemente 8 auf den Haltebereich 5. Nun sind die Verbindungselemente 8 jedoch bevorzugt elastisch verformbar ausgebildet, womit sich diese bei Auftreten eines Stoßes und der damit einhergehenden Massenkräfte elastisch verformen und die Stöße abfedern bzw. dämpfen.

In der vorliegenden Ausführungsform sind die Verbindungselemente 8 ringförmig ausgebildet und zwischen dem Haltebereich 5 und dem Befestigungsbereich 6 angeordnet. Grundsätzlich sind jedoch auch andere Formen der Verbindungselemente 8 möglich, die eine federnde Verbindung des Haltebereichs 5 mit dem Befestigungsbereich 6 ermöglichen. Beispielsweise sind zickzackförmige, rombusförmige oder andere Verbindungsarten denkbar.

Bevorzugt weicht der Verlauf der Verbindungselemente 8 von der Richtung der Schwerkraft 7 ab, sodass Stöße nicht entlang der Verbindungselemente 8 sondern schräg oder quer zu den Verbindungselementen 8 verlaufen und die Verbindungselemente 8 als Biegeträger wirken können.

Gemäß einer bevorzugt Ausführungsform kann vorgesehen sein, dass das Verbindungselement 8 einen zumindest teilweise von der Schwerkraftrichtung 7 abweichenden Verlauf aufweist und den Haltebereich 5 mit dem Befestigungsbereich 6 der Haltevorrichtung 4 verbindet. Beim Auftreten von Stößen verbiegt sich das Verbindungselement 8 elastisch und die wirkenden Kräfte werden abgefedert bzw. gedämpft.

Gemäß einer Ausführungsform ist ein Verbindungselement 8 ringförmig bzw. symmetrisch zur Schwerkraftrichtung 7 ausgebildet. Dieses Verbindungselement 8 ist, entlang der Schwerkraftrichtung 7 gesehen, oben und unten mit dem Haltebereich 5 bzw. mit dem Befestigungsbereich 6 verbunden. Durch diese Verbindungen werden die Kräfte von dem Haltebereich 5 an den Befestigungsbereich 6 übertragen. Das dazwischenliegende Verbindungselement 8 kann dabei dynamisch und elastisch verformt werden.

In der vorliegenden Ausführungsform weist die Haltevorrichtung 4 mehrere Öffnungen 10 auf. Diese Öffnungen 10 haben mehrere synergetisch wirkende Effekte. So verringern die Öffnungen 10 die Herstellungskosten, da Material bei der Haltevorrichtung 4 eingespart werden kann. Zudem ermöglichen die Öffnungen 10 eine elastische Verformung der Verbindungselemente 8 zur Abdämpfung von Stößen. Darüber hinaus können die Öffnungen 10 der Haltevorrichtung 4 eine gitter- bzw. stegförmige Struktur verleihen, womit die Haltevorrichtung 4 nicht nur in oder gegen die Schwerkraftrichtung 7, sondern auch quer zur Schwerkraftrichtung 7 verbogen werden kann. Im Falle der Verwendung in einem Rucksack hilft dies, den Tragekomfort des Rucksacks zu erhöhen. So kann die Rückenfläche des Rucksacks flexibel ausgebildet sein, wenn die Haltevorrichtung 4 in der Rückentasche 11 des Rucksacks angeordnet ist. Dadurch kann sich auch die Rückenfläche an den Rücken der Person anpassen, die den Rucksack trägt. Zudem können die Öffnungen 10 als Lüftungsöffnungen dienen, was insbesondere bei der Ausführungsform als Rucksack den Tragekomfort erhöht.

Gemäß einer vorteilhaften Ausführungsform setzen am Befestigungsbereich 6 mehrere Verbindungselemente 8 an, die in unterschiedliche Richtungen, bevorzugt nach oben und seitlich von dem Befestigungsbereich 6 bis zum Haltebereich 5 verlaufen. Ist der Haltebereich 5 rahmenförmig ausgebildet, so können die Verbindungselemente 8 von dem Befestigungsbereich 6 sternförmig abragen, um eine Halterung in alle Richtungen zu bewirken. Eine derartige sternförmige Anordnung ist auch in Fig. 2 dargestellt, bei der die Verbindungselemente 8 in vier Richtungen von dem Befestigungsbereich 6 Richtung Haltebereich 5 verlaufen.

Grundsätzlich ist es aber auch denkbar, dass die Verbindungselemente 8 gitterförmig, insbesondere wabenförmig, ausgebildet sind, um den Haltebereich 5 mit dem Befestigungsbereich 6 zu verbinden.

Bevorzugt umfasst die Vorrichtung eine Hakenverbindung 12. Diese umfasst eine Hakentasche 16, in die ein Haken 15 eingeführt ist. Zur Fixierung des Hakens 15 in der Hakentasche 16 ist ein Schnappverschluss 13 ausgebildet. Die Hakentasche 16 ist bevorzugt starr ausgebildet und an einem plattenförmigen Element angeordnet. Dieses plattenförmige Element bzw. die Hakentasche 16 können den Befestigungsbereich 6 der Haltevorrichtung 4 bilden.

Bevorzugt umfasst die Vorrichtung eine Fixiervorrichtung 17. Diese dient dazu, die Befestigungsvorrichtung 3 am Fahrrad 2 zu montieren. Die Fixiervorrichtung 17 umfasst in einer bevorzugten Ausführungsform ein Klemmband 20, das um ein Teil des Fahrrads 2 gelegt ist. Durch Festziehen des Klemmbands 20 gegen eine Basis 19 wird das Teil des Fahrrads 2 in einer zwischen Basis 19 und Klemmband 20 vorgesehenen Klemmöffnung 21 festgeklemmt. Das Klemmband 20 kann beispielsweise ein Metallband sein. Ist das Klemmband 20 flexibel ausgebildet, beispielsweise als biegbares Metallband, so kann sich das Klemmband 20 flexibel an den Durchmesser des Teils des Fahrrads 2 anpassen.

**Fig. 3** zeigt eine schematische Schnittdarstellung von Komponenten einer Vorrichtung, beispielsweise der Vorrichtung aus den Fig. 1 und/oder 2, und insbesondere eine Haltevorrichtung 4, die über eine Befestigungsvorrichtung 3 mit einer Komponente eines Fahrrads 2 verbunden ist. Diese Komponente des Fahrrads 2 ist beispielsweise die Sattelstange. Die Befestigungsvorrichtung 3 ist über eine Fixiervorrichtung 17 mit dem Fahrrad 2 verbunden. Die Fixiervorrichtung 17 umfasst bevorzugt eine Basis 19, ein Klemmband 20, ein Spannelement 23 und mindestens einen Keil 22. Zwischen der Basis 19 und dem Klemmband 20 ist eine Klemmöffnung 21 vorgesehen, durch die das Element des Fahrrads 2 hindurch geführt ist. Durch Festziehen des Spannelements 23 kann das Klemmband 20 Richtung Basis 19 gezogen werden, womit sich die Klemmöffnung 21 verkleinert und die Komponente des Fahrrads 2 fest mit der Fixiervorrichtung 17 bzw. der Befestigungsvorrichtung 3 verbunden wird. Hierzu ist in der vorliegenden Ausführungsform ein Keil 22 vorgesehen. Dieser Keil 22 ist verschiebbar an der Basis 19 bzw. an einer Keilfläche 24 der Basis 19 angeordnet. Durch Festziehen des Spannelements 23 verschiebt sich der Keil 22 derart, dass das Klemmband 20 festgezogen wird. Wird das Spannelement 23 teilweise geöffnet oder entfernt, so kann das Klemmband 20 geöffnet werden und die Komponente des Fahrrads 2 kann im Bereich oder an der Basis 19 positioniert werden. In einem weiteren Schritt kann das Klemmband 20 um die Komponente des Fahrrads 2 gelegt und mit der Basis 19 verbunden werden. Durch Festziehen des Spannelements 23 wird diese Verbindung festgezogen und fixiert.

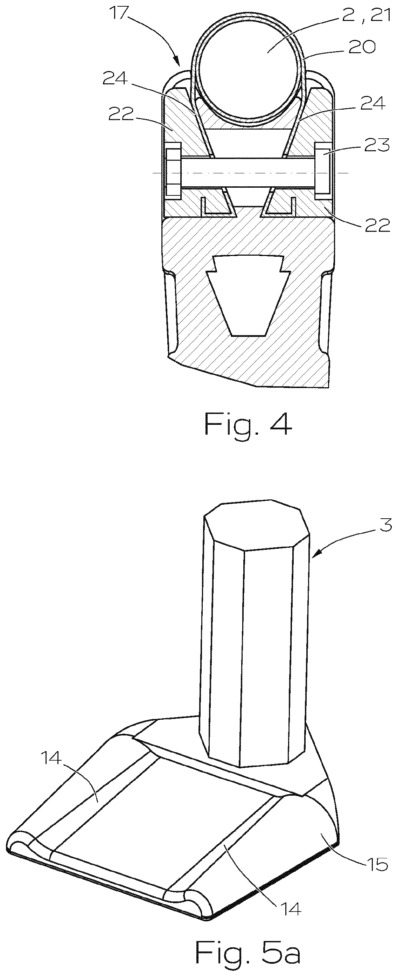

Der Aufbau der Fixiervorrichtung 17 ist auch in **Fig. 4** dargestellt. Fig. 4 zeigt eine schematische Schnittdarstellung, deren Schnittfläche im Wesentlichen normal zum Verlauf der Komponente des Fahrrads 2 verläuft.

Bei der Ausführungsform der Fig. 4, gegebenenfalls auch in Fig. 3, sind zwei Keile 22 beidseitig vorgesehen. Durch Festziehen des Spannelements 23 werden beide Keile 22 zueinander gezogen, und das Klemmband 20 zieht sich fest um die Komponente des Fahrrads 2.

Hierzu ist für den Keil 22 eine Keilfläche 24 vorgesehen. An dieser Keilfläche 24 liegen, wie auch in den Fig. 2, 3 und 5 zu sehen sind, jeweils ein Keil 22 an. Die Keilfläche 24 ist bevorzugt schräg gestellt und dient als Gleitfläche für den Keil 22. Wie zuvor beschrieben, kann durch Festziehen eines Spannelements 23 und die Verschiebung des Keils 22 an der Keilfläche 24 ein Festziehen des Klemmbands 20 bewirkt werden.

Die Basis 19 kann, wie beispielsweise aus Fig. 2 ersichtlich ist, einen U-förmigen Abschnitt aufweisen, sodass die Komponente des Fahrrads 2 in einer vorbestimmten Lage fixiert werden kann. Jene Öffnung, durch die das Spannelement 23 durch die Basis 19 geführt ist, weist gegenüber dem Spannelement 23 ein gewisses Übermaß auf bzw. ist diese Öffnung als Langloch ausgebildet, um eine Verschiebung des Keils 22 oder der Keile 22 zuzulassen, wenn das Spannelement 23 betätigt wird.

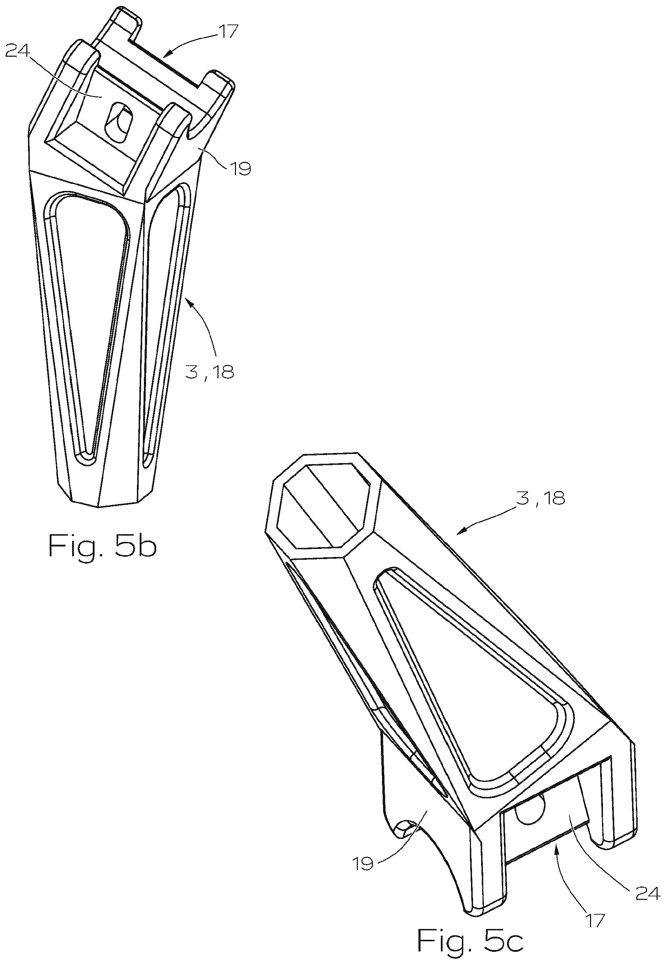

Die U-förmige Ausgestaltung der Basis 19 und die langlochförmige Ausbildung dieser Öffnung sind auch in Fig. 5b eingezeichnet.

Fig. 3 zeigt eine Ausführungsform, bei der die Befestigungsvorrichtung 3 längenverstellbar ausgebildet ist. Insbesondere ist die Befestigungsvorrichtung 3 teleskopförmig ausgebildet.

Die Verbindung der Befestigungsvorrichtung 3 mit der Haltevorrichtung 4 geschieht bevorzugt über eine Hakenverbindung 12. Bei dieser Ausführungsform wird ein Haken 15 in eine Hakentasche 16 eingeführt, um die Hakenverbindung 12 zu schließen. Um die Hakenverbindung 12 in ihrer geschlossenen Stellung zu halten, kann ein Schnappverschluss 13 vorgesehen sein. Dieser rastet bevorzugt selbsttätig ein, wenn die Hakenverbindung 12 geschlossen wird. Um die Hakenverbindung 12 zu lösen, kann der Schnappverschluss 13 beispielsweise manuell gelöst werden. Hierzu kann, wie in der vorliegenden Ausführungsform, ein Fortsatz bzw. eine Nocke vorgesehen sein, der/die gegen eine Federkraft weggebogen werden kann, um die Hakenverbindung 12 zu lösen.

Gemäß einer bevorzugten Ausführungsform, wie auch in Fig. 3 dargestellt, wird die Hakenverbindung 12 in Schwerkraftrichtung 7 geschlossen und gegen die Schwerkraftrichtung 7 wieder geöffnet. Die Haltevorrichtung 4 ist bevorzugt aufrecht stehend angeordnet, sodass deren Verbindungselemente 8 gegen die Schwerkraft federnd arbeiten können.

In allen Ausführungsformen weist die Hakenverbindung 12 bevorzugt Einlaufflächen 14, insbesondere Einlaufschrägen, auf. Dadurch kann das Einführen des Hakens 15 in die Hakentasche 16 erleichtert werden. Insbesondere kann durch eine keilförmige Anordnung auch eine Lagezentrierung der Hakenverbindung 12 erreicht werden. Dadurch kann beispielsweise eine spielfreie Halterung des Hakens 15 in der Hakentasche 16 bewirkt werden. So kann der Haken 15, trotz Fertigungstoleranzen, so weit in die Hakentasche 16 eingebracht werden, bis die Einlaufflächen 14 aneinander anliegen und eine feste, spielfreie Verbindung hergestellt ist.

Fig. 5a zeigt einen Teil einer längenverstellbaren Befestigungsvorrichtung 3, an der auch der Haken 15 vorgesehen ist. Das Teil weist einen polygonförmigen Stutzen auf, der in ein entsprechend geformtes Loch des anderen Teils der Befestigungsvorrichtung 3 eingeführt werden kann. Dies ist beispielsweise auch in Fig. 3 dargestellt. Durch die polygonförmige Ausgestaltung kann eine feste, verdrehsichere Teleskopverbindung geschaffen werden.

Der Haken 15 kann, wie auch zu Fig. 3 beschrieben, Einlaufflächen 14 aufweisen. Diese Einlaufflächen 14 sind insbesondere keilförmig bzw. wulstförmig ausgebildet und ermöglichen eine einfache Einführung des Hakens 15 in die nicht dargestellte Hakentasche 16 und der Herstellung einer im Wesentlichen spielfreien und/oder festen Verbindung.

Die Fig. 5b und 5c zeigen mögliche Gegenstücke des Teils aus Fig. 5a.

Die Basis 19 der Teile der Fig. 5b und 5c ist U-förmig bzw. zusammenlaufend ausgebildet, sodass das mit der Fixiervorrichtung 17 fixierte Teil des Fahrrads 2 in seiner Lage festgelegt wird.

In Fig. 5c ist eine polygonförmige Öffnung vorgesehen, die ein Einführen des Polygons, beispielsweise des Polygons aus Fig. 5a, ermöglicht. Dadurch kann eine feste verdrehsichere Verbindung hergestellt werden, die teleskopartig auseinander und zusammen geschoben werden kann. Eine Fixierung in einer vorbestimmten Länge kann über herkömmliche Mittel, beispielsweise über eine Madenschraube erfolgen.

Zu den in den Figuren dargestellten Details wird angemerkt, dass die Vorrichtung bevorzugt eine Befestigungsvorrichtung 3, eine Haltevorrichtung 4, eine Hakenverbindung 12, eine Fixiervorrichtung 17, die beschriebenen elastisch verformbaren Verbindungselemente 8 und einen teleskopförmig längenverstellbaren Träger 18 umfasst. Jedoch können diese Komponenten auch unabhängig voneinander eingesetzt werden, um eine verbesserte Verbindung eines Transportgegenstands 1 an einem Fahrrad 2 zu bewirken. Beispielsweise können die Verbindungselemente 8 auch mit einer anderen, beliebigen Verbindung am Fahrrad 2 angebracht werden. Auch kann die Befestigungsvorrichtung 3 beispielsweise mit einem starren, nicht verlängerbaren Träger 18 eingesetzt werden.

## Patentansprüche

1. Vorrichtung zur lösbaren Befestigung eines Transportgegenstands (1), wie insbesondere eines Rucksacks oder einer Tasche, an einem Fahrrad (2), umfassend eine fahrradseitig angebrachte bzw. anbringbare Befestigungsvorrichtung (3) und eine transportgegenstandsseitig angebrachte bzw. anbringbare Haltevorrichtung (4),
- wobei die Haltevorrichtung (4) einen Haltebereich (5) zur Halterung des Transportgegenstands (1) und einen Befestigungsbereich (6) zur Befestigung der Haltevorrichtung (4) an der Befestigungsvorrichtung (3) aufweist,
wobei die Haltevorrichtung (4) elastisch verformbare Verbindungselemente (8) aufweist, über die der Befestigungsbereich (6) federnd mit dem Haltebereich (5) verbunden ist,
- wobei die Verbindungselemente (8) derart ausgestaltet sind, dass sie, zur Abfederung der vom Fahrrad (2) auf den Transportgegenstand (1) übertragenen Stöße, eine gefederte Relativbewegung des Befestigungsbereichs (6) gegenüber dem Haltebereich (5) erlauben und
**dadurch gekennzeichnet, dass**
die Haltevorrichtung flach ausgebildet ist, wobei der Befestigungsbereich, der Haltebereich und die Verbindungselemente im Wesentlichen in einer Ebene liegen, um zusammen einen flachen, insbesondere flach gitterförmigen, Körper zu bilden.

2. Vorrichtung nach Anspruch 1, **dadurch gekennzeichnet, dass** die Verbindungselemente (8) in der montierten Stellung der Vorrichtung ihre Federwirkung entlang der Richtung (7) der Schwerkraft entfalten.

3. Vorrichtung nach einem der Ansprüche 1 oder 2, **dadurch gekennzeichnet,**
- **dass** die Haltevorrichtung (4) gitterförmig ausgebildet ist,
- und/oder dass die Haltevorrichtung (4) aus Stegen zusammengesetzt ist,
- und/oder dass die Haltevorrichtung (4) in ihrer unverformten Stellung entlang einer Ebene verläuft,
- und/oder dass die Haltevorrichtung (4) einen Haltebügel (9) oder einen Halterahmen aufweist, der zumindest einen Teil des Haltebereichs (5) bildet,
- und/oder dass in der Haltevorrichtung (4) mehrere Öffnungen (10), insbesondere Lüftungsöffnungen, vorgesehen sind,
- und/oder dass die Haltevorrichtung (4) als einstückiges Teil ausgebildet ist.

4. Vorrichtung nach einem der Ansprüche 1 bis 3 **dadurch gekennzeichnet,**
- **dass** die Haltevorrichtung (4) als Rückeneinlage zur Einlage in eine Rückentasche (11) eines Rucksacks ausgebildet ist,
- und **dass** die Form der Haltevorrichtung (4) an die Form des Rückenteils des Rucksacks angepasst ist und sich insbesondere flexibel an die Form des Rückenteils anpasst.

5. Vorrichtung nach einem der Ansprüche 1 bis 4, **dadurch gekennzeichnet, dass** eine arretierbare und werkzeuglos lösbare Hakenverbindung (12) zur Verbindung der Befestigungsvorrichtung (3) und der Haltevorrichtung (4) vorgesehen ist.

6. Vorrichtung nach Anspruch 5, **dadurch gekennzeichnet, dass** die Hakenverbindung (12) entlang der Schwerkraftrichtung (7) verbindbar und gegen die Schwerkraft lösbar ausgebildet ist.

7. Vorrichtung nach Anspruch 5 oder 6, **dadurch gekennzeichnet, dass** die Hakenverbindung (12) einen beim Verbinden selbsttätig einrastenden Schnappverschluss (13) umfasst, der werkzeuglos, insbesondere durch Betätigen des Schnappverschlusses (13), gelöst werden kann.

8. Vorrichtung nach einem der Ansprüche 5 bis 7, **dadurch gekennzeichnet, dass** die Hakenverbindung (12) mindestens eine Einlauffläche (14) und insbesondere eine Einlaufschräge zur Lagezentrierung der Hakenverbindung (12) beim Verbinden aufweist.

9. Vorrichtung nach einem der Ansprüche 5 bis 8, **dadurch gekennzeichnet, dass** die Hakenverbindung (12) einen an der Befestigungsvorrichtung (3) vorgesehenen Haken (15) und eine in der Haltevorrichtung (4), insbesondere im Befestigungsbereich (6), vorgesehene Hakentasche (16) zur Aufnahme des Hakens (15) aufweist.

10. Vorrichtung nach einem der Ansprüche 1 bis 9, **dadurch gekennzeichnet, dass** die Befestigungsvorrichtung (3) eine Fixiervorrichtung (17) zur Befestigung der Befestigungsvorrichtung (3) aufweist.

11. Vorrichtung nach Anspruch 5 und 10, **dadurch gekennzeichnet, dass** die Befestigungsvorrichtung (3) einen Träger (18) umfasst, und dass an einem Ende des Trägers (18) die Fixiervorrichtung (17) und am anderen Ende des Trägers (18) die Hakenverbindung (12) vorgesehen ist.

12. Vorrichtung nach Anspruch 11, **dadurch gekennzeichnet, dass** der Träger (18) längenverstellbar und insbesondere teleskopartig längenverstellbar ausgebildet ist.

13. Vorrichtung nach einem der Ansprüche 10 bis 12, **dadurch gekennzeichnet,**
- **dass** die Fixiervorrichtung (17) eine Basis (19), ein Klemmband (20), eine zwischen Basis (19) und Klemmband (20) vorgesehene Klemmöffnung (21) zur Durchführung eines Teils des Fahrrads (2) wie insbesondere der Sattelstütze aufweist,
- **dass** die Fixiervorrichtung (17) mindestens einen auf einer Keilfläche (24) verschiebbar angeordneten Keil (22) und ein auf den Keil (22) wirkendes Spannelement (23) aufweist,
- und **dass** der Keil (22) bei Betätigen des Spannelements (23) das Klemmband (20) festzieht und bevorzugt Richtung Basis festzieht,
- bevorzugt, dass die Fixiervorrichtung (17) zwei auf je einer Keilfläche (24) verschiebbar angeordneten Keile (22) und ein auf die Keile (22) wirkendes Spannelement (23) aufweist und dass die Keile (22) bei Betätigen des Spannelements (23) das Klemmband (20) festziehen und bevorzugt Richtung Basis festziehen.

14. **Anordnung** umfassend ein Fahrrad (2), einen Transportgegenstand (1), wie insbesondere einen Rucksack, und eine Vorrichtung nach einem der vorangegangenen Ansprüche zur lösbaren Befestigung des Transportgegenstands (1) an dem Fahrrad (2).

15. Rucksack, umfassend eine Haltevorrichtung (4) zur lösbaren Befestigung an einem Fahrrad (2) mittels einer fahrradseitig angebrachten bzw. anbringbaren Befestigungsvorrichtung (3),
- wobei die Haltevorrichtung (4) einen Haltebereich (5) zur Halterung des Rucksacks und einen Befestigungsbereich (6) zur Befestigung der Haltevorrichtung (4) an einer Befestigungsvorrichtung (3) aufweist,
- wobei die Haltevorrichtung (4) elastisch verformbare Verbindungselemente (8) aufweist, über die der Befestigungsbereich (6) federnd mit dem Haltebereich (5) verbunden ist und wobei die Verbindungselemente (8) derart ausgestaltet sind, dass sie, zur Abfederung der vom Fahrrad (2) auf den Transportgegenstand (1) übertragenen Stöße, eine gefederte Relativbewegung des Befestigungsbereichs (6) gegenüber dem Haltebereich (5) erlauben
**dadurch gekennzeichnet, dass**
die Haltevorrichtung flach ausgebildet ist, wobei der Befestigungsbereich, der Haltebereich und die Verbindungselemente im Wesentlichen in einer Ebene liegen, um zusammen einen flachen, insbesondere flach gitterförmigen, Körper zu bilden.

## Claims

1. Device for the releasable attachment of an item (1) to be transported, such as in particular a backpack or a bag, to a bicycle (2), comprising a mounting device (3) attached or attachable to the bicycle and a holding device (4) attached or attachable to the item to be transported,
- wherein the holding device (4) comprises a holding section (5) for holding the item to be transported (1) and a mounting section (6) for attaching the holding device (4) to the mounting device (3), wherein the holding device (4) comprises elastically deformable connecting elements (8) via which the mounting section (6) is resiliently connected to the holding section (5),
- wherein the connecting elements (8) are configured such that, in order to cushion shocks transmitted from the bicycle (2) to the item to be transported (1), they allow a resilient relative movement of the mounting section (6) with respect to the holding section (5), and
**characterized in that**
the holding device is of a flat design, wherein the mounting section, the holding section, and the connecting elements lie substantially in a single plane so as to jointly form a flat body, in particular a flat grid-like body.

2. Device according to claim 1, **characterized in that** the connecting elements (8), in the mounted position of the device, exert their spring action along the direction (7) of gravity.

3. Device according to claim 1 or 2, **characterized**
- **in that** the holding device (4) is configured in the form of a grid,
- and/or in that the holding device (4) is composed of struts,
- and/or in that the holding device (4), in its undeformed position, extends along a plane,
- and/or in that the holding device (4) comprises a retaining bracket (9) or a retaining frame which forms at least a part of the holding section (5),
- and/or in that a plurality of openings (10), in particular ventilation openings, are provided in the holding device (4),
- and/or in that the holding device (4) is formed as a one-piece part.

4. Device according to any one of claims 1 to 3, **characterized in that**
- the holding device (4) is configured as a back insert for insertion into a back pocket (11) of a backpack,
- and the shape of the holding device (4) is adapted to the shape of the back section of the backpack and, in particular, flexibly conforms to the shape of the back section.

5. Device according to any one of claims 1 to 4, **characterized in that** a lockable hook connection (12) that can be released without tools is provided for connecting the mounting device (3) and the holding device (4).

6. Device according to claim 5, **characterized in that** the hook connection (12) is configured to be connectable along the direction of gravity (7) and releasable against the direction of gravity.

7. Device according to claim 5 or 6, **characterized in that** the hook connection (12) comprises a snap-fit fastener (13) that automatically engages upon connection and can be released without tools, in particular by actuating the snap-fit fastener (13).

8. Device according to any one of claims 5 to 7, **characterized in that** the hook connection (12) comprises at least one lead-in surface (14), and in particular a lead-in slope, for centering the position of the hook connection (12) during connection.

9. Device according to any one of claims 5 to 8, **characterized in that** the hook connection (12) comprises a hook (15) provided on the mounting device (3) and a hook pocket (16) provided in the holding device (4) - in particular in the mounting region (6) - for receiving the hook (15).

10. Device according to any one of claims 1 to 9, **characterized in that** the mounting device (3) comprises a fixing device (17) for securing the mounting device (3).

11. Device according to claims 5 and 10, **characterized in that** the mounting device (3) comprises a carrier (18), and **in that** the fixing device (17) is provided at one end of the carrier (18) and the hook connection (12) is provided at the other end of the carrier (18).

12. Device according to claim 11, **characterized in that** the carrier (18) is designed to be adjustable in length, and in particular telescopically adjustable in length.

13. Device according to any one of claims 10 to 12, **characterized**
- **in that** the fixing device (17) comprises a base (19), a clamping band (20), and a clamping opening (21) provided between the base (19) and the clamping band (20) for the passage of a part of the bicycle (2), such as in particular the seat post,
- **in that** the fixing device (17) comprises at least one wedge (22) arranged displaceably on a wedge surface (24) and a tensioning element (23) acting on the wedge (22),
- and **in that**, upon actuation of the tensioning element (23), the wedge (22) tightens the clamping band (20), and preferably tightens it towards the base,
- preferably, in that the fixing device (17) comprises two wedges (22), each arranged displaceably on a respective wedge surface (24), and a tensioning element (23) acting on the wedges (22), and in that, upon actuation of the tensioning element (23), the wedges (22) tighten the clamping band (20), and preferably tighten it towards the base.

14. Arrangement comprising a bicycle (2), an item to be transported (1), such as in particular a backpack, and a device according to any of the preceding claims for the releasable attachment of the item to be transported (1) to the bicycle (2).

15. Backpack comprising a holding device (4) for releasable attachment to a bicycle (2) by means of a mounting device (3) mounted or mountable on the bicycle,
- wherein the holding device (4) comprises a holding section (5) for holding the backpack and a mounting section (6) for attaching the holding device (4) to a mounting device (3),
- wherein the holding device (4) comprises elastically deformable connecting elements (8) via which the mounting section (6) is resiliently connected to the holding section (5), and wherein the connecting elements (8) are configured such that, in order to cushion shocks transmitted from the bicycle (2) to the item to be transported (1), they allow a resilient relative movement of the mounting section (6) with respect to the holding section (5),
**characterized in that**
the holding device is of a flat design, wherein the mounting section, the holding section, and the connecting elements lie substantially in a single plane so as to jointly form a flat body, in particular a flat grid-like body.

## Revendications

1. Dispositif de fixation amovible d'un objet de transport (1), tel notamment un sac à dos ou un sac, à un vélo (2), comprenant un dispositif de fixation (3) fixé ou fixable au vélo et un dispositif de maintien (4) fixé ou fixable à l'objet de transport,
- le dispositif de maintien (4) comportant une zone de maintien (5) pour maintenir l'objet de transport (1) et une zone de fixation (6) pour fixer le dispositif de maintien (4) au dispositif de fixation (3), le dispositif de maintien (4) comportant des éléments de connexion élastiquement déformables (8) au moyen desquels la zone de fixation (6) est reliée de manière élastique à la zone de maintien (5),
- les éléments de connexion (8) étant conçus de manière à permettre un mouvement relatif, sous ressort, de la zone de fixation (6) par rapport à la zone de maintien (5) afin d'amortir les chocs transmis du vélo (2) à l'objet de transport (1), et
**caractérisé en ce que**
le dispositif de maintien est conçu pour être plat, de sorte que la zone de fixation, la zone de maintien et les éléments de connexion se trouvent essentiellement dans un même plan pour former un corps plat, en particulier en forme de treillis plat.

2. Dispositif selon la revendication 1, **caractérisé en ce que** les éléments de connexion (8) exercent leur effet de ressort dans le sens (7) de la gravité lorsque le dispositif est assemblé.

3. Dispositif selon la revendication 1 ou 2, **caractérisé en ce que**:
- le dispositif de maintien (4) est en forme de treillis,
- et/ou le dispositif de maintien (4) est composé de nervures,
- et/ou le dispositif de maintien (4) s'étend dans un plan à l'état non déformé,
- et/ou le dispositif de maintien (4) comporte un support de retenue (9) ou un cadre de retenue formant au moins une partie de la zone de maintien (5),
et/ou plusieurs ouvertures (10), notamment des ouvertures de ventilation, sont prévues dans le dispositif de maintien (4),
- et/ou le dispositif de maintien (4) est monobloc.

4. Dispositif selon l'une quelconque des revendications 1 à 3, **caractérisé en ce que**:
- le dispositif de maintien (4) est conçu comme un insert dorsal destiné à être inséré dans une poche dorsale (11) d'un sac à dos,
- et que la forme du dispositif de maintien (4) est adaptée à la forme du panneau dorsal du sac à dos et, en particulier, s'adapte avec souplesse à cette forme.

5. Dispositif selon l'une quelconque des revendications 1 à 4, **caractérisé en ce qu'**un système de fixation à crochet verrouillable et libérable sans outil (12) est prévu pour relier le dispositif de fixation (3) et le dispositif de maintien (4).

6. Dispositif selon la revendication 5, **caractérisé en ce que** le système de fixation à crochet (12) est conçu pour être connecté dans le sens de la gravité (7) et libéré dans le sens inverse de celle-ci.

7. Dispositif selon la revendication 5 ou 6, **caractérisé en ce que** le crochet (12) comprend un verrou à enclenchement (13) qui s'enclenche automatiquement lors de la connexion et peut être déverrouillé sans outil, notamment par actionnement du verrou (13).

8. Dispositif selon l'une quelconque des revendications 5 à 7, **caractérisé en ce que** le crochet (12) présente au moins une surface d'entrée (14) et, en particulier, un chanfrein d'entrée permettant de centrer le crochet (12) lors de la connexion.

9. Dispositif selon l'une quelconque des revendications 5 à 8, **caractérisé en ce que** le crochet (12) comporte un crochet (15) prévu sur le dispositif de fixation (3) et un logement pour crochet (16) prévu dans le dispositif de maintien (4), notamment dans la zone de fixation (6), destiné à recevoir le crochet (15).

10. Dispositif selon l'une quelconque des revendications 1 à 9, **caractérisé en ce que** le dispositif de fixation (3) comporte un dispositif de fixation (17) permettant de le fixer.

11. Dispositif selon les revendications 5 et 10, **caractérisé en ce que** le dispositif de fixation (3) comprend un support (18), le dispositif de fixation (17) étant prévu à une extrémité du support (18) et le crochet de fixation (12) à l'autre extrémité.

12. Dispositif selon la revendication 11, **caractérisé en ce que** le support (18) est réglable en longueur et, en particulier, télescopique.

13. Dispositif selon l'une des revendications 10 à 12, **caractérisé en ce que**:
- le dispositif de fixation (17) comporte une base (19), une bande de serrage (20) et une ouverture de serrage (21) ménagée entre la base (19) et la bande de serrage (20) pour traverser une partie du vélo (2), notamment la tige de selle;
- le dispositif de fixation (17) comporte au moins une cale (22) coulissante sur une surface de calage (24) et un élément de serrage (23) agissant sur la cale (22);
- et que, lorsque l'élément de serrage (23) est actionné, la cale (22) serre la bande de serrage (20), de préférence vers la base;
- de préférence, le dispositif de fixation (17) comporte deux cales (22) coulissantes sur des surfaces de calage (24) et un élément de serrage (23) agissant sur ces cales (22). Lorsque l'élément de serrage (23) est actionné, les cales (22) le serrent et, de préférence, la bande de serrage (20) se resserre vers la base.

14. Dispositif comprenant un vélo (2), un objet de transport (1), notamment un sac à dos, et un dispositif selon l'une des revendications précédentes permettant de fixer de manière amovible l'objet de transport (1) au vélo (2).

15. Sac à dos comprenant un dispositif de maintien (4) amovible pour fixation à un vélo (2) au moyen d'un dispositif de fixation (3) monté sur le vélo ou pouvant y être fixé,
- le dispositif de maintien (4) comporte une zone de maintien (5) pour maintenir le sac à dos et une zone de fixation (6) permettant de fixer le dispositif de maintien (4) au dispositif de fixation (3);
- le dispositif de maintien (4) comporte des éléments de connexion élastiquement déformables (8) par lesquels la zone de fixation (6) est reliée de manière élastique à la zone de maintien (5), ces éléments de connexion (8) sont conçus de manière à permettre un mouvement relatif, sous ressort, de la zone de fixation (6) par rapport à la zone de maintien (5) afin d'amortir les chocs transmis du vélo (2) à l'objet transporté (1);
**caractérisé en ce que**
le dispositif de maintien est conçu pour être plat, de sorte que la zone de fixation, la zone de maintien et les éléments de connexion se trouvent essentiellement dans un même plan pour former un corps plat, en particulier en forme de treillis plat.
